# EUROPÄISCHE PATENTSCHRIFT

(11) **EP 2 091 779 B1**
(45) Veröffentlichungstag und Bekanntmachung des Hinweises auf die Patenterteilung: **23.03.2011**
(21) Anmeldenummer: 07784611.1
(22) Anmeldetag: 09.08.2007
(51) Int. Cl.: B60N 2/56

(54) **SCHONBEZUG FÜR EINEN SITZ**
PROTECTIVE COVER FOR A SEAT
HOUSSE DE SIÈGE

(30) Priorität: 14.08.2006 AT 13602006
(43) Veröffentlichungstag der Anmeldung: 26.08.2009
(73) Patentinhaber: Walser GmbH, 6845 Hohenems (AT)
(72) Erfinder: WALSER, Hans-Karl, 6845 Hohenems (AT)
(74) Vertreter: Hofmann, Ralf U.
(86) Internationale Anmeldenummer: PCT/AT2007/000382
(87) Internationale Veröffentlichungsnummer: WO 2008/019413

(56) Entgegenhaltungen:
- EP-A- 1 454 790
- WO-A-2004/095986
- DE-A1- 10 037 065
- DE-A1- 19 545 596
- DE-A1-102004 001 777
- DE-U1- 20 112 473

## Beschreibung

Die Erfindung bezieht sich auf einen Schonbezug für einen Sitz, der eine Sitzfläche und vorzugsweise eine Rückenlehne mit einer Lehnfläche aufweist.

Schonbezüge für Sitze insbesondere für Fahrzeugsitze, Kindersitze und für Polstermöbel zum Sitzen sind in unterschiedlichen Ausführungsformen bekannt. Bei herkömmlichen Schonbezügen ist häufig zu beobachten, dass, wenn die auf dem Schonbezug sitzende Person, insbesondere in jenen Körperbereichen, die den besagten Schonbezug beaufschlagen, transpiriert, die von der Person evaporierte Transpiration nicht ausreichend entweichen kann. Dies macht sich insbesondere in der warmen Jahreszeit bei Schonbezügen für Fahrzeugsitze oder auch in Büros bei Büropolstermöbeln zum Sitzen beim Sitzenden als unangenehmes Sitzgefühl bemerkbar.

Aus der WO 2004/096601 A1 ist ein Kraftfahrzeugsitz mit einer Luftversorgungseinrichtung bekannt, mittels der eine Ventilationsschicht des Polsters des Sitzes zur Sitzbelüftung und/oder zur Sitzheizung mit einem Luftstrom durchflutbar ist, und mit einer im oberen Bereich des Sitzes angeordneten Luftausstromöffnung der Luftversorgungseinrichtung, über die der Kopf-, Schulter- und Nackenbereich des Sitzinsassen mit einem Luftstrom beaufschlagbar ist, wobei der Luftversorgungseinrichtung ein Gebläse zugeordnet ist. Die Ventilationsschicht ist aus einem Abstandsgewirke aufgebaut. Abstandsgewirke haben die Eigenschaft beispielsweise von einem Luftstrom, aber auch von einem Dampfstrom, besonders gut durchflutet werden zu können. Um einen Kraftfahrzeugsitz mit einer universeller einsetzbaren Luftversorgungseinrichtung zu schaffen, ist das Gebläse zur Erzeugung des Luftstroms für den Kopf-, Schulter- und Nackenbereich des Sitzinsassen mit Luft aus der Ventilationsschicht des Polsters des Sitzes versorgbar. Diese Konstruktion ist sehr aufwendig und teuer und für einen nachträglichen Einbau nicht verwendbar.

Bekannt sind weiters Mikrofaservliese in unterschiedlichen Ausbildungen. Vliese bzw. Vliesstoffe sind textile Flächengebilde aus Fasern bzw. Filamenten, die nicht aus einem Web- oder Maschenbildungs-Prozess hervorgehen, wobei ihre englische Bezeichnung "non-woven" bzw. "nonwoven" auch von deutschsprachigen Fachleuten als Anglizismus verwendet wird. Ein Mikrofaservlies ist somit ein Vlies aus Mikrofasern. Der Begriff Mikrofaser bzw. Mikrofilament ist eine Sammelbezeichnung für Fasern, deren Einzelfäden eine Feinheit von 0,9 den oder weniger haben, die meisten Mikrofasern liegen bei 0,5 bis 0,6 den. Häufig werden bei der Herstellung von Mikrofaservliesen die Mikrofasern vor dem Verfestigen gesponnen und gelegt. Dieser Prozess wird in einem weiteren Anglizismus als "Spunlaid"-Prozess bezeichnet. Ein kommerziell erhältliches Mikrofaservlies (spunlaid nonwoven) ist beispielsweise "EVOLON" von der Firma Freudenberg Nonwovens, wie es auch in der US 2006/0035555 A1 beschrieben ist. Ein Verfahren zur Erzeugung von Faservliesen aus teilbaren Stapelfasern (splittable staple fibers) ist beispielsweise in der US 6,692,541 B2 beschrieben. Der Hauptunterschied zwischen dem dort beschriebenen Material und spunlaid nonwovens ist, dass spunlaid nonwovens aus kontinuierlichen gesponnenen und gelegten Mikrofilamenten (continuous spunlaid nonwoven filaments) und nicht aus teilbaren Stapelfasern wie in der vorgenannten US 6,692,541 hergestellt wird. Vliese aus Mikrofasern sind vielfältig einsetzbar. Beispielsweise werden Mikrofaservliese für Autoinnenausstattungen wie Autositzbezüge, Schuhe, Arbeits-, Sport- und Freizeitkleidung sowie für Heimtextilien verwendet.

Ein Schonbezug mit den Merkmalen des Oberbegriffs des Anspruchs 1 ist der US 5 806 925 A zu entnehmen.

Aufgabe der Erfindung ist es, einen Schonbezug bereitzustellen, der eine verbesserte Abfuhr der Transpiration eines Benutzers ermöglicht und der preisgünstig herstellbar ist. Erfindungsgemäß gelingt dies durch einen Schonbezug mit den Merkmalen des Anspruchs 1.

Der Schonbezug weist mindestens einen von einer den Sitz benutzenden Person (=Benutzer) beaufschlagbaren Pufferbereich auf. In diesem Pufferbereich ist der Schonbezug zumindest zweilagig mit einer aus einem Mikrofaservlies bestehenden Pufferlage und einer sitzseitig dieser Pufferlage angeordneten aus einem luft- und dampfdurchlässigen Material bestehenden Transportlage ausgebildet. Weiters weist der Schonbezug mindestens einen an den Pufferbereich anschließenden Abführbereich auf. Der an den Pufferbereich angrenzende Abführbereich erstreckt sich zumindest über einen Teil bzw. über einen Abschnitt der den Pufferbereich umgebenden Umfangszone. Die beiden Bereiche weisen somit zumindest eine Grenzlinie endlicher Länge auf. Vorzugsweise beträgt die Länge dieser Grenzlinie mindestens ein Fünftel der Länge des Umfangs des Pufferbereiches. Die rechtwinkelig zur Grenzlinie gemessene Breite des Abführbereiches beträgt günstigerweise mindestens 0,5 cm, vorzugsweise mindestens 1 cm.

Im Abführbereich besteht der Schonbezug zumindest angrenzend an die benutzerseitige Oberfläche des Schonbezugs aus einem luft- und dampfdurchlässigen Material. Dieses Material weist zur benutzerseitigen Oberfläche des Schonbezugs hin eine Vielzahl von Luftdurchtrittsöffnungen einer Größe von mindestens 1 mm x 1 mm auf.

Aufgrund der Wasseraufnahmefähigkeit von Mikrofaservliesen kann somit erreicht werden, dass eine Transpiration des Benutzers in der Pufferlage zwischengespeichert wird. Von der Pufferlage gelangt die zwischengespeicherte Transpiration entweder in die Transportlage oder sie wird außerhalb des vom Benutzer tatsächlich beaufschlagten Pufferbereichs von der Pufferlage selbst wieder an die Umgebung abgegeben. Durch die unterhalb der Pufferlage angeordnete Transportlage hindurch kann in der Pufferlage zwischengespeicherte Transpiration in den Abführbereich gelangen. Dort kann sie durch die Luftdurchtrittsöffnungen des zumindest luft- und dampfdurchlässigen Materials, beispielsweise durch ein Abstandsgewirke mit einer entsprechenden Loch- bzw. Maschenweite, leicht in die Umgebung entweichen.

Vorzugsweise wird die Transportlage von einer Maschenware, beispielsweise einem Abstandsgewirke, gebildet, wobei die Maschenware Durchgangskanäle von mindestens 2 mm x 2 mm besitzt.

Wenn hier von Transpiration die Rede ist, so ist in erster Linie von durch den Körper des Benutzers erwärmte Luft, die mit durch den Körper des Benutzers verdampftem Schweiß beladen ist, zu verstehen. Die Transpiration kann jedoch in Bereichen niedrigerer Temperaturen zu Feuchtigkeit d.h. zu kleinen Tröpfchen kondensieren. Auch für diese Feuchtigkeit sollen das Material der Transportlage und das Material des (jeweiligen) Abführbereiches vorzugsweise durchlässig sein.

In einer vorteilhaften Ausführungsform der Erfindung weist ein Schonbezug einen Sitzteil zum Überdecken der Sitzfläche und einen Rückenlehnenteil zum Überdecken der Lehnfläche des Sitzes auf, wobei sowohl der Sitzteil als auch der Rückenlehnenteil jeweils mindestens einen Pufferbereich und jeweils mindestens einen an den jeweiligen Pufferbereich angrenzenden Abführbereich aufweisen.

Weitere Vorteile und Einzelheiten der Erfindung werden im Folgenden anhand der beiliegenden Zeichnung erläutert. In dieser zeigen:
Fig. 1 eine schematische Schrägsicht auf einen Sitz mit Rückenlehne, der mit einer ersten Ausführungsform eines erfindungsgemäßen Schonbezuges bezogen ist;
Fig. 2 einen vergrößerten schematischen Teilquerschnitt entlang der Linie A-A in Fig. 1;
Fig. 3 einen vergrößerten schematischen Teilquerschnitt durch eine zweite Ausführungsform eines erfindungsgemäßen Schonbezuges;
Fig. 4 eine schematische Schrägsicht auf einen Sitz mit Rückenlehne, der mit einer dritten Ausführungsform eines erfindungsgemäßen Schonbezuges bezogen ist.

Wenn in dieser Schrift von einem Sitz die Rede ist, so sind darunter insbesondere Polstersitze jeder Art zu verstehen, beispielsweise Fahrzeugsitze, Kindersitze oder Polstermöbel zum Sitzen im Wohn- und Arbeitsbereich.

Der Begriff "sitzseitige Oberfläche" 8 bezeichnet jene Unterseite des Schonbezuges, welche, wenn der Sitz 4 mit dem Schonbezug bezogen ist, der Sitzfläche 5 des Sitzes 4 bzw. der Lehnfläche der Rückenlehne 2 benachbart und zugewandt ist.

Hingegen bezeichnet der Begriff "benutzerseitige Oberfläche" 23 jene Oberseite des Schonbezuges, welche, wenn der Sitz 4 mit dem Schonbezug bezogen ist und der Benutzer auf dem Sitz 4 sitzt, dem Benutzer benachbart und zugewandt ist.

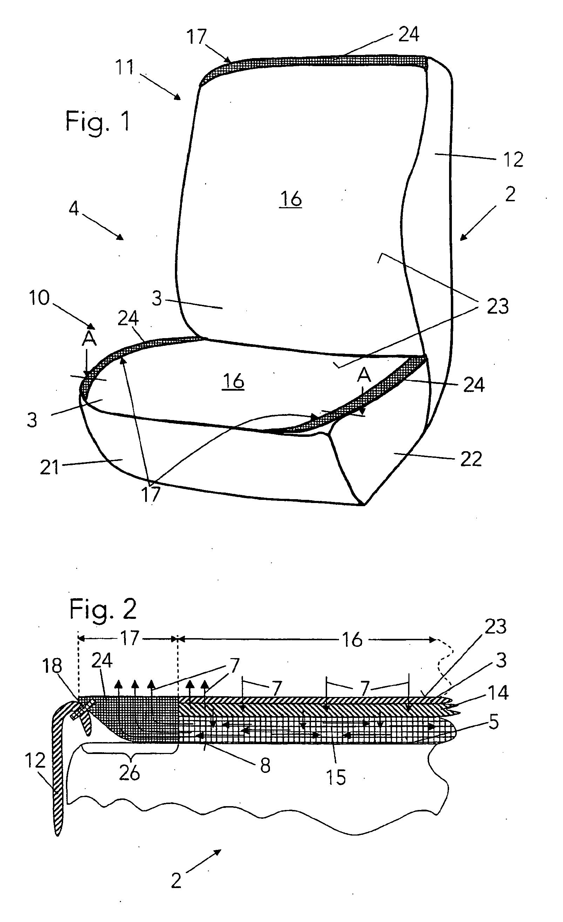

Eine erste Ausführungsform eines erfindungsgemäßen Schonbezuges ist in den Fig. 1 und 2 dargestellt. Der Schonbezug ist auf einen Sitz 4 aufgezogen. Der Sitz 4 weist einen Sitzteil mit einer Sitzfläche 5 und eine Rückenlehne 2 mit einer Lehnfläche auf. Der Schonbezug umfasst einen Sitzteil 10 zum Überdecken der Sitzfläche 5 und einen Rückenlehnenteil 11 zum Überdecken der Lehnfläche. Der Sitz könnte zusätzlich auch eine Kopfstütze umfassen, welche ebenfalls von Teilen des erfindungsgemäßen Schonbezuges bezogen sein kann.

Hier weist der Sitzteil 10 auch Stoffbahnen 21, 22 auf, welche jene Flächen des Sitzes 4 überdecken, die seitlich und vorne an die Sitzfläche 5 angrenzen und sich ausgehend von diesen nach unten erstrecken. Der Rückenlehnenteil 11 des Schonbezuges weist Stoffbahnen 12 auf, welche jene Flächen des Sitzes 4 überdecken, die seitlich und oben an die Lehnfläche angrenzen. Diese Stoffbahnen 12, 21, 22 sind für die Erfindung unwesentlich. Sie können mit dem die Sitzfläche 5 bzw. die Lehnfläche überdeckenden Teil des Schonbezuges beispielsweise mittels einer Naht 18 vernäht sein (Fig. 2).

Der Schonbezug weist mindestens einen vom Benutzer beaufschlagbaren Pufferbereich 16 auf. In diesem Pufferbereich 16 ist der Schonbezug zumindest zweilagig ausgebildet. Die dem Benutzer nähere Lage ist eine aus einem Mikrofaservlies bestehende Pufferlage 14. Diese Pufferlage 14 ist hier benutzerseitig noch von einem Bezugsstoff 3 überdeckt. Der Bezugsstoff 3 kann auch entfallen. Wenn vorhanden, so muss er jedoch luft- und dampfdurchlässig sein. Er kann auch zusätzlich feuchtigkeitsdurchlässig sein. Er kann ein Dekor aufweisen.

Die Pufferlage 14 ist sowohl in Richtung zur sitzseitigen Oberfläche 8 als auch in Richtung zur benutzerseitigen Oberfläche 23 des Schonbezuges luft- und dampfdurchlässig, und vorzugsweise auch feuchtigkeitsdurchlässig und zwar in alle Richtungen, insbesondere nach oben zur benutzerseitigen Oberfläche 23 als auch zur sitzseitigen Oberfläche 8 des Schonbezuges hin (Pfeile 7 in Fig. 2). Das Mikrofaservlies der Pufferlage 14 besteht beispielsweise aus einem thermoplastischen Polymer z.B. PET oder Nylon. Die non-woven Struktur des Mikrofaservlieses der Pufferlage 14 kann in einem Spunlaid-Prozess und vorzugsweise durch Wasserstrahlverfestigung ausgebildet sein. Das Mikrofaservlies der Pufferlage 14 ist hydrophil ausgerüstet und besteht z.B. aus EVOLON.

Die Wasseraufnahmekapazität WAK (nach DIN 53 923) des Mikrofaservlieses der Pufferlage 14 beträgt günstigerweise mindestens 1000 ml/m², vorzugsweise mindestens 1500 ml/m².

Sitzseitig der Pufferlage 14 ist direkt an diese anschließend eine Transportlage 15 angeordnet. Die Transportlage 15 ist in alle Richtungen (Pfeile 7 in Fig. 2) luft- und dampfdurchlässig, vorzugsweise auch feuchtigkeitsdurchlässig. Im Ausführungsbeispiel besteht die Transportlage 15 aus einem Abstandsgewirke. Sie könnte beispielsweise auch aus einem Spinnstoff oder aus einem offenporigen Schaum bestehen.

Die Dicke der Transportlage 15 ist größer als die Dicke der Pufferlage 14. Vorzugsweise ist die Transportlage 15 mehr als doppelt so dick wie die Pufferlage 14.

Bei Benutzung des Schonbezuges strömt die Transpiration aufgrund des Temperatur- und Druckgradienten im vom Benutzer beaufschlagten Abschnitt des Pufferbereiches überwiegend von der benutzerseitigen Oberfläche 23 in Richtung zur sitzseitigen Oberfläche 8 bzw. in Richtung zum Abführbereich 17 hin.

Die Transportlage 15 könnte auch zwei- oder mehrlagig ausgebildet sein. Die insgesamte Dicke der Transportlage 15 beträgt mindestens 2 mm, vorzugsweise mindestens 3 mm. Sitzseitig der luft- und dampfdurchlässigen, vorzugsweise auch feuchtigkeitsdurchlässigen Transportlage 15 könnten auch ein oder mehrere weitere nicht dampfdurchlässige Lagen angeordnet sein.

Der Schonbezug weist mindestens einen an den jeweiligen Pufferbereich 16 angrenzenden Abführbereich 17 auf. Hier weist sowohl der Sitzteil 10 als auch der Rückenlehnenteil 11 jeweils einen Pufferbereich 16 und jeweils einen an den Pufferbereich 16 angrenzenden Abführbereich 17 auf. Der Abführbereich 17 des Sitzteils 10 überdeckt hier die beiden - vom Benutzer aus gesehen - seitlichen Randstreifen 26 der Sitzfläche 5. Der Abführbereich 17 des Rückenlehnenteils 11 überdeckt hier den oberen Randstreifen der Lehnfläche.

Im Abführbereich 17 besteht der Schonbezug zumindest angrenzend an die benutzerseitige Oberfläche 23 des Schonbezugs aus einem luft- und dampfdurchlässigen Material. Vorzugsweise ist dieses Material zusätzlich feuchtigkeitsdurchlässig. Im Ausführungsbeispiel ist es ein Abstandsgewirke, welches zur benutzerseitigen Oberfläche 23 des Schonbezugs hin eine Vielzahl von Luftdurchtrittsöffnungen 24 einer Größe von mindestens 1 mm x 1 mm aufweist. Hierbei ist hier der Schonbezug im Abführbereich 17 einlagig aus einer Lage Abstandsgewirke gebildet. Er könnte im Abführbereich 17 auch aus einer anderen Maschenware z.B. aus einem Kettengewirke gebildet sein.

Der Schonbezug könnte im Abführbereich 17 auch zwei- oder mehrlagig ausgebildet sein, wobei er sitzseitig einer oder mehrerer zumindest luft- und dampfdurchlässiger Lagen auch eine nicht dampfdurchlässige Lage aufweisen könnte. Vorzugsweise ist die insgesamte Dicke des dampfdurchlässigen Teils hierbei aber größer als die Dicke des nicht dampfdurchlässigen Teils.

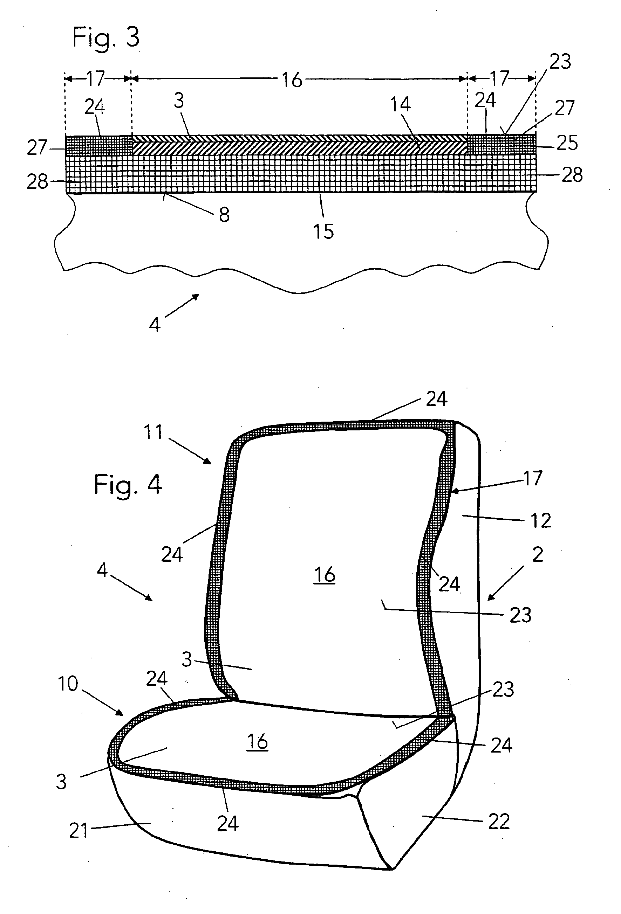

Eine zweite Ausführungsform des erfindungsgemäßen Schonbezuges ist in Fig. 3 dargestellt. Der Schonbezug ist hier im Abführbereich 17 zweilagig ausgebildet. Die beiden Lagen 27, 28 des Schonbezuges im Abführbereich 17 sind übereinander angeordnet. Die an die benutzerseitige Oberfläche 23 angrenzende Lage 27 besteht aus einem Material, dessen Luftdurchtrittsöffnungen 24 und Transportkanäle 25 kleiner sind als jene der sitzseitig angrenzenden Lage 28. Hier sind beide Lagen 27, 28 des Schonbezuges im Abführbereich 17 jeweils aus einem Abstandsgewirke gebildet. Sie könnten beispielsweise jeweils aus einer anderen Maschenware mit entsprechenden Maschenweiten gebildet sein. Die Transportlage 15 des Pufferbereichs 16 setzt sich hierbei über den Abführbereich 17 durchgehend fort. Sie bildet hier im Abführbereich 17 somit die sitzseitige Lage 28. Die Transportlage 15 besteht somit wieder aus einem Abstandsgewirke. Sie könnte auch aus einem Spinnstoff oder aus einem offenporigen Schaum bzw. Schaumstoff bestehen.

Die an die benutzerseitige Oberfläche 23 angrenzende Lage 27 könnte beispielsweise auch von einer rasterartig perforierten Folie gebildet werden, wobei die Perforierungen die Luftdurchtrittsöffnungen bilden und eine Größe von mindestens 1 mm x 1 mm aufweisen (bei kreisförmigen Perforierungen beträgt der Kreisdurchmesser somit mindestens 1 mm).

Eine dritte Ausführungsform des erfindungsgemäßen Schonbezuges ist in Fig. 4 dargestellt. Hier überdeckt der Abführbereich 17 des Sitzteils 10 zusätzlich einen vorderen Randstreifen der Sitzfläche 5. Weiters überdeckt der Abführbereich 17 des Rückenlehnenteils 11 zusätzlich die beiden seitlichen Randstreifen der Lehnfläche.

Wie aus der obigen Beschreibung verständlich wird, ist der Abführbereich 17 bei vorgesehenen Sitzpositionen des Benutzers zumindest teilweise nicht vom Benutzer beaufschlagt. Der Pufferbereich 16 erstreckt sich über die zentralen Bereiche des Sitzteils 10 bzw. des Rückenlehnenteils 11.

### Legende

### zu den Bezugszeichen:

- 2: Rückenlehne
- 3: Bezugsstoff
- 4: Sitz
- 5: Sitzfläche
- 7: Pfeil (Strömungsrichtung der Transpiration)
- 8: sitzseitige Oberfläche
- 10: Sitzteil
- 11: Rückenlehnenteil
- 12: Stoffbahn
- 14: Pufferlage
- 15: Transportlage
- 16: Pufferbereich
- 17: Abführbereich
- 18: Naht
- 21: Stoffbahn
- 22: Stoffbahn
- 23: benutzerseitige Oberfläche
- 24: Luftdurchtrittsöffnung
- 25: Transportkanal
- 26: seitlicher Randstreifen
- 27: Lage
- 28: Lage

## Patentansprüche

1. Schonbezug für einen Sitz (4), der eine Sitzfläche (5) und vorzugsweise eine Rückenlehne (2) mit einer Lehnfläche aufweist, **dadurch gekennzeichnet, dass** der Schonbezug mindestens einen von einer den Sitz (4) benutzenden Person beaufschlagbaren Pufferbereich (16) aufweist, in welchem der Schonbezug zumindest zweilagig mit einer aus einem Mikrofaservlies bestehenden Pufferlage (14) und einer sitzseitig dieser Pufferlage (14) angeordneten aus einem luft- und dampfdurchlässigen Material bestehenden Transportlage (15) ausgebildet ist, und dass der Schonbezug mindestens einen an den Pufferbereich (16) angrenzenden Abführbereich (17) aufweist, in welchem der Schonbezug zumindest anschließend an die benutzerseitige Oberfläche (23) des Schonbezugs aus einem luft- und dampfdurchlässigen Material besteht, welches zur benutzerseitigen Oberfläche (23) des Schonbezugs hin eine Vielzahl von Luftdurchtrittsöffnungen (24) einer Größe von mindestens 1 mm x 1 mm aufweist.

2. Schonbezug nach Anspruch 1, **dadurch gekennzeichnet, dass** das Material der Transportlage (15) auch feuchtigkeitsdurchlässig ist und/oder dass das an die benutzerseitige Oberfläche (23) angrenzende Material des Abführbereiches (17) auch feuchtigkeitsdurchlässig ist.

3. Schonbezug nach Anspruch 1 oder 2, **dadurch gekennzeichnet, dass** das an die benutzerseitige Oberfläche (23) angrenzende Material des Abführbereiches (17) eine Maschenware, vorzugsweise ein Abstandsgewirke oder Kettengewirke ist.

4. Schonbezug nach einem der Ansprüche 1 bis 3, **dadurch gekennzeichnet, dass** der Schonbezug einen Sitzteil (10) zum Überdecken der Sitzfläche (5) und einen Rückenlehnenteil (11) zum Überdecken der Lehnfläche umfasst und sowohl der Sitzteil (10) als auch der Rückenlehnenteil (11) jeweils mindestens einen Pufferbereich (16) und jeweils mindestens einen an den jeweiligen Pufferbereich (16) angrenzenden Abführbereich (17) aufweisen.

5. Schonbezug nach einem der Ansprüche 1 bis 4, **dadurch gekennzeichnet, dass** der Abführbereich (17) des Sitzteils (10) zumindest die beiden seitlichen Randstreifen (26) der Sitzfläche (5) überdeckt, wobei vorzugsweise der Abführbereich (17) des Sitzteils (10) zusätzlich zumindest den vorderen Randstreifen der Sitzfläche (5) überdeckt.

6. Schonbezug nach einem der Ansprüche 1 bis 5, **dadurch gekennzeichnet, dass** der Abführbereich (17) des Rückenlehnenteils (11) zumindest den oberen Randstreifen der Lehnfläche überdeckt, wobei vorzugsweise der Abführbereich (17) des Rückenlehnenteils (11) zusätzlich zumindest die beiden seitlichen Randstreifen der Lehnfläche überdeckt

7. Schonbezug nach einem der Ansprüche 1 bis 6, **dadurch gekennzeichnet, dass** die Pufferlage (14) des Pufferbereichs (16) benutzerseitig von einem Bezugsstoff (3) überdeckt ist und/oder dass die Pufferlage (14) sowohl in Richtung zur sitzseitigen Oberfläche (8) als auch in Richtung zur benutzerseitigen Oberfläche (23) des Schonbezuges luft- und dampfdurchlässig, vorzugsweise auch feuchtigkeitsdurchlässig ist.

8. Schonbezug nach einem der Ansprüche 1 bis 7, **dadurch gekennzeichnet, dass** das Mikrofaservlies der Pufferlage (14) aus einem thermoplastischen Polymer besteht, wobei vorzugsweise die non-woven Struktur des Mikrofaservlieses der Pufferlage (14) in einem Spunlaid-Prozess und vorzugsweise durch Wasserstrahlverfestigung ausgebildet ist.

9. Schonbezug nach einem der Ansprüche 1 bis 8, **dadurch gekennzeichnet, dass** die Dicke der Transportlage (15) größer als die Dicke der Pufferlage (14) ist, wobei die Transportlage (15) vorzugsweise mindestens doppelt so dick wie die Pufferlage (14) ist.

10. Schonbezug nach einem der Ansprüche 1 bis 9, **dadurch gekennzeichnet, dass** der Schonbezug im Abführbereich (17) einlagig ausgebildet ist.

11. Schonbezug nach einem der Ansprüche 1 bis 9, **dadurch gekennzeichnet, dass** der Schonbezug im Abführbereich (17) mindestens zweilagig ausgebildet ist.

12. Schonbezug nach Anspruch 11, **dadurch gekennzeichnet, dass** die an die benutzerseitige Oberfläche (23) angrenzende Lage (27) aus einem Material besteht, dessen Luftdurchtrittsöffnungen (24) und Transportkanäle (25) kleiner sind als jene der sitzseitig an diese Lage (27) angrenzenden Lage (28).

13. Schonbezug nach Anspruch 12, **dadurch gekennzeichnet, dass** diese mindestens zwei Lagen (27, 28) des Schonbezuges im Abführbereich (17) jeweils aus einer Maschenware mit unterschiedlichen Maschenweiten gebildet sind.

14. Schonbezug nach einem der Ansprüche 11 bis 13, **dadurch gekennzeichnet, dass** sich die Transportlage (15) des Pufferbereichs (16) über den Abführbereich (17) durchgehend fortsetzt.

15. Schonbezug nach einem der Ansprüche 1 bis 14, **dadurch gekennzeichnet, dass** die Transportlage (15) aus einem Abstandsgewirke oder einem Spinnstoff oder aus einem offenporigen Schaum besteht.

## Claims

1. A protective cover for a seat (4) which has a sitting surface (5) and preferably a backrest (2) with a resting surface, **characterised in that** the protective cover has at least one buffer region (16) which can be acted upon by a person using the seat (4), in which region the protective cover is formed in at least two layers with a buffer layer (14) consisting of a microfibre non-woven and a transport layer (15) arranged on the seat side of this buffer layer (14) and consisting of an air-permeable and vapour-permeable material, and **in that** the protective cover has at least one removal region (17) adjoining the buffer region (16), in which removal region the protective cover, at least adjoining the user-side surface (23) of the protective cover, consists of an air-permeable and vapour-permeable material which has towards the user-side surface (23) of the protective cover a plurality of air passage openings (24) of a size of at least 1 mm x 1 mm.

2. A protective cover according to Claim 1, **characterised in that** the material of the transport layer (15) is also moisture-permeable and/or **in that** the material of the removal region (17) which adjoins the user-side surface (23) is also moisture-permeable.

3. A protective cover according to Claim 1 or 2, **characterised in that** the material of the removal region (17) which adjoins the user-side surface (23) is a knitted fabric, preferably a spacer fabric or warp knit fabric.

4. A protective cover according to one of Claims 1 to 3, **characterised in that** the protective cover comprises a seat part (10) for covering the sitting surface (5) and a backrest part (11) for covering the resting surface, and both the seat part (10) and the backrest part (11) have in each case at least one buffer region (16) and in each case at least one removal region (17) adjoining the respective buffer region (16).

5. A protective cover according to one of Claims 1 to 4, **characterised in that** the removal region (17) of the seat part (10) covers at least the two lateral edge strips (26) of the sitting surface (5), with preferably the removal region (17) of the seat part (10) additionally covering at least the front edge strip of the sitting surface (5).

6. A protective cover according to one of Claims 1 to 5, **characterised in that** the removal region (17) of the backrest part (11) covers at least the upper edge strip of the resting surface, with preferably the removal region (17) of the backrest part (11) additionally covering at least the two lateral edge strips of the resting surface.

7. A protective cover according to one of Claims 1 to 6, **characterised in that** the buffer layer (14) of the buffer region (16) is covered on the user side by a cover material (3) and/or **in that** the buffer layer (14), both in the direction of the seat-side surface (8) and in the direction of the user-side surface (23) of the protective cover, is air-permeable and vapour-permeable, preferably also moisture-permeable.

8. A protective cover according to one of Claims 1 to 7, **characterised in that** the microfibre non-woven of the buffer layer (14) consists of a thermoplastic polymer, with preferably the non-woven structure of the microfibre non-woven of the buffer layer (14) being formed in a spunlaid process and preferably by hydroentanglement.

9. A protective cover according to one of Claims 1 to 8, **characterised in that** the thickness of the transport layer (15) is greater than the thickness of the buffer layer (14), the transport layer (15) preferably being at least twice as thick as the buffer layer (14).

10. A protective cover according to one of Claims 1 to 9, **characterised in that** the protective cover is formed in one layer in the removal region (17).

11. A protective cover according to one of Claims 1 to 9, **characterised in that** the protective cover is formed in at least two layers in the removal region (17).

12. A protective cover according to Claim 11, **characterised in that** the layer (27) adjoining the user-side surface (23) consists of a material the air passage openings (24) and transport channels (25) of which are smaller than those of the layer (28) adjoining this layer (27) on the seat side.

13. A protective cover according to Claim 12, **characterised in that** these at least two layers (27, 28) of the protective cover in the removal region (17) are each formed from a knitted fabric with different mesh widths.

14. A protective cover according to one of Claims 11 to 13, **characterised in that** the transport layer (15) of the buffer region (16) extends continuously across the removal region (17).

15. A protective cover according to one of Claims 1 to 14, **characterised in that** the transport layer (15) consists of a spacer fabric or a textile material or of an open-pored foam.

## Revendications

1. Housse de siège, le siège (4) ayant une surface d'assise (5) et de préférence un dossier (2) avec une surface d'appui,
housse **caractérisée en ce qu'**
elle comporte au moins une zone d'amortissement (16) recevant l'utilisateur du siège (4) et dans laquelle la housse est composée d'au moins deux couches, à savoir d'une couche d'amortissement (14) formée d'une nappe de microfibres et d'une couche de transport (15) réalisée en un matériau perméable à l'air et à la vapeur, et prévue sur le côté assise de cette couche d'amortissement (14), et
la housse a au moins une zone d'évacuation (17) adjacente à la zone d'amortissement (16) et dans laquelle la housse se compose au moins de façon adjacente à la surface supérieure (23), côté utilisateur de la housse, d'une matière perméable à l'air et à la vapeur et dont la surface supérieure (23), côté utilisateur de la housse, a un grand nombre d'orifices de passage d'air (24) d'une dimension d'au moins 1 mm x 1 mm.

2. Housse de siège selon la revendication 1,
**caractérisée en ce que**
la matière de la couche de transport (15) est perméable à l'humidité et/ou la matière adjacente à la surface supérieure (23), côté utilisateur, de la zone d'évacuation (17) est perméable à l'humidité.

3. Housse de siège selon la revendication 1 ou 2,
**caractérisée en ce que**
la matière de la zone d'évacuation (17) adjacente à la surface supérieure (23), côté utilisateur, est une matière tricotée, de préférence un tricot à espacements ou un tricot chaîne.

4. Housse de siège selon l'une des revendications 1 à 3,
**caractérisée en ce que**
la housse a une partie d'assise (10) pour couvrir la surface d'assise (5) et une partie de dossier (11) pour couvrir le dossier, et à la fois la partie d'assise (10) et la partie de dossier (11), ont chacune au moins une zone d'amortissement (16) et chaque fois au moins une zone d'évacuation (17) adjacente à la zone d'amortissement (16), respective.

5. Housse de siège selon l'une des revendications 1 à 4,
**caractérisée en ce que**
la zone d'évacuation (17) de la partie d'assise (10), couvre au moins les deux bandes latérales (26) de la surface d'assise (5) et de préférence, la zone d'évacuation (17) de la partie d'assise (10) couvre en plus au moins la bande du bord avant de la surface d'assise (5).

6. Housse de siège selon l'une des revendications 1 à 5,
**caractérisée en ce que**
la zone d'évacuation (17) de la partie de dossier (11), couvre au moins la zone de bord, supérieure, de la surface de dossier et de préférence la zone d'évacuation (17) de la partie de dossier (11) couvre en plus au moins les deux bandes latérales de la surface de dossier.

7. Housse de siège selon l'une des revendications 1 à 6,
**caractérisée en ce que**
la couche d'amortissement (14) de la zone d'amortissement (16) est couverte côté utilisateur par une matière de revêtement (3) et/ou la couche d'amortissement (14) est perméable à l'air et à la vapeur, de préférence également à l'humidité à la fois en direction de la surface supérieure (8) côté assise et dans la direction de la surface supérieure (23) côté utilisateur de la housse de siège.

8. Housse de siège selon l'une des revendications 1 à 7,
**caractérisée en ce que**
la nappe de microfibres de la couche d'amortissement (14) est formée d'un polymère thermoplastique et de préférence, la structure non tissée de la nappe de microfibres de la couche d'amortissement (14), est réalisée par un procédé couche non tissée et de préférence, par un procédé d'aiguilletage par jet d'eau.

9. Housse de siège selon l'une des revendications 1 à 8,
**caractérisée en ce que**
l'épaisseur de la couche de transport (15) est supérieure à l'épaisseur de la couche d'amortissement (14), et
la couche de transport (15) a de préférence une épaisseur double de celle de la couche d'amortissement (14).

10. Housse de siège selon l'une des revendications 1 à 9,
**caractérisée en ce que**
la housse est réalisée par une seule couche dans la zone d'évacuation (17).

11. Housse de siège selon l'une des revendications 1 à 9,
**caractérisée en ce que**
la zone d'évacuation (17) est réalisée au moins avec deux couches.

12. Housse de siège selon la revendication 11,
**caractérisée en ce que**
la couche (27) adjacente à la surface supérieure (23), côté utilisateur, est réalisée en une matière dont les orifices de passage d'air (24) et les canaux de transport (25), sont plus petits que ceux de la couche (28) adjacent à cette couche (27), côté assise.

13. Housse de siège selon la revendication 12,
**caractérisée en ce qu'**
elle se compose d'au moins deux couches (27, 28) dans la zone d'évacuation (17) avec chaque fois un tricot ayant des dimensions de mailles différentes.

14. Housse de siège selon l'une des revendications 11 à 13,
**caractérisée en ce que**
la couche de transport (15) de la zone d'amortissement (16) se prolonge sur la zone d'évacuation (17).

15. Housse de siège selon l'une des revendications 1 à 14,
**caractérisée en ce que**
la couche de transport (15) est réalisée en un tricot lâche ou une matière filée ou en une mousse à pores ouverts.
